# EUROPEAN PATENT APPLICATION

(11) **EP 2 019 368 A1**
(43) Date of publication of application: **28.01.2009**
(21) Application number: 08159911.0
(22) Date of filing: 08.07.2008
(51) Int. Cl.: G06Q 10/00

(54) **Method and system for managing object circulation**

(30) Priority: 19.07.2007 EP 07112754; 03.08.2007 EP 07113762
(71) Applicant: Océ-Technologies B.V., 5914 CA Venlo (NL)
(72) Inventor: Willems, Teun K.J., 5665 CR, Geldrop (NL); Sonnenberg, Cornelis J., 5351 MK, Berghem (NL)
(74) Representative: van Meeteren, Arend Anthonie

(57) **Abstract**

A method for managing circulation of physical objects (10) among a plurality of users (A - D) who are connected to a management center (12) through a telecommunications network (22), characterized by comprising the steps of:
a) on behalf of the management center (12):
- maintaining in an electronic database (14), for each object to be circulated, a static list (84) of potential recipients,
- receiving and storing object-related status information from the recipients
- maintaining and updating, in the database (14), a dynamic list (20) of active recipients by selection from the static list (84) by means of fixed criteria and on the basis of the status information, and
- allowing users to access the dynamic list (20) of active recipients via the network (22),

b) on behalf of a user (A - D) wanting to forward an object (10) to another recipient:
- consulting the dynamic list (20) of active recipients for that object and selecting from that list another user (D) as next recipient,
- physically forwarding the object (10) to that recipient,
- and sending status information notifying the next recipient to the management center (12).

## Description

The invention relates to a method for managing object circulation among a number of users who are connected to a management center through a telecommunications network. More specifically, it relates to a circulation management system for physical objects such as hard-copy documents.

In many companies and institutions, hard-copies of documents such as magazines, internal reports and the like, that are of interest for a plurality of members, are circulated among these members so as to reduce the costs for procuring multiple copies of these documents. However, unless the number of users who participate in the circulation is relatively small and these users are working in the same room or at least in close proximity to one another, the circulation needs to be managed in a suitable way in order to make sure that every user gets the possibility to read the publications he is interested in within reasonable time after appearance.

A suitable scheme for organizing document circulation is a line-circulation wherein a fixed sequence is established in which the documents are passed on from one user to the other. A drawback of this scheme is that it is inflexible and provides practically no control over the circulation process. For example, when a user is late with reading and forwarding the document, and a subsequent user is urgently waiting for the document, it is difficult for him to find out where in the sequence the document has got "stuck".

Another possible scheme corresponds to a star configuration wherein the circulation is controlled by a management center that may for example be installed in or run by a library. The management center will hand-out or send the document to a first user who, after he has read the document, will return it to the management center, and then the other users will be served in the same way. This method has the advantage that the management center has always control over the current location of the document and the expected time it will be returned. However, the physical transport of the documents to and from the users is inefficient and time-consuming, especially when some of the users are located far away from the management center.

It is accordingly an object of the invention to provide a circulation system that permits to readily monitor the progress of the circulation and is nevertheless flexible and efficient.

In order to achieve this object, the invention proposes a method that takes advantage of electronic data processing and network infrastructure and is characterized by comprising the steps of:
a) on behalf of the management center:
   - maintaining in an electronic database, for each object to be circulated, a static list of potential recipients,
   - receiving and storing object-related status information from the recipients
   - maintaining and updating, in the database, a dynamic list of active recipients by selection from the static list by means of fixed criteria and on the basis of the status information, and
   - allowing users to access the dynamic list of active recipients via the network,
b) on behalf of a user wanting to forward an object to another recipient:
   - consulting the dynamic list of active recipients for that object and selecting from that list another user as next recipient,
   - physically forwarding the object to that recipient,
   - and sending status information notifying the next recipient to the management center.

The present invention adapts the teachings of administrative schemes for circulation of physical objects and multi-purpose technical equipment (database and telecommunications hardware and software, known per se) to eachother, in such manner that the physical objects are circulated more efficiently.
In this way, the invention solves a technical problem, because the solution requires technical considerations in order to utilise the capabilities of the technical equipment more effectively.

A scheme for circulating physical objects implies not only a flow of the objects themselves but also a flow of information, because each participant in the system has to know to whom he has to forward the object. As is well known, it is the strength of the technical equipment (telecommunications and database hardware and software) that it can remarkably speed-up the flow of information. However, the shortcoming of such an equipment is that it cannot provide for or assist in the flow of the physical objects.

Utilising the capabilities of technical equipment to the advantage of an efficient object circulation, the invention proposes to separate the flow of information from the flow of the physical objects. While the objects still flow in accordance with a line-circulation scheme which minimises the necessary physical transports, a star-configuration is adopted for the flow of information, and the technical equipment is adapted to and used for providing this flow of information.

Starting from the known star-configuration scheme, the invention not just consists of automating the processes that heretofore had to be performed manually in the management center, but it introduces new processes, i.e. a frequent exchange of information between the management center and the users for updating and consulting a dynamic list of recipients.

At first sight, this additional flow of information which was not necessary in the known scheme, implies an additional burden on the users. However, the technical equipment permits to keep this burden relatively low, because it permits the users to consult the database in the management center and to transmit information to the management center in a very convenient way. The advantage of the invention is that it combines the transparency of a star configuration with the low transport effort of a line circulation. This combination is possible only because the known technical equipment is used for a new purpose and in a new way.

Although the method according to the invention is generally applicable to objects of any kind that are to be shared among a plurality of users, the present specification will focus on the circulation of hard-copy documents, such as magazines, as a representative example.

According to the invention, the physical transport of the documents is efficient because it is not necessary to return the document to the management center each time it has to be passed on from one user to another. In this respect, the method is similar to conventional line-circulation. On the other hand, the method according to the invention is flexible because it does not fix a sequence in which the document has to be passed on. Thus, when a user is in urgent need of a specific document, he has the liberty to informally persuade the other participants to forward the document to him first when they have read it. On the other hand, if a user is not interested in a particular issue of a magazine, for example, or foresees that he will not have the time to read the document in the near future, he may signal to his colleagues that he should temporarily be skipped in the sequence or he may pass the document on to the next user himself. Such modifications permit to meet varying demands of the users without disrupting the structure of the circulation system.

Nevertheless, by monitoring the status information and keeping the dynamic list of active recipients updated, the method can assure that, if required, each document (or object) will be served to each user only once. Moreover, whereas the physical flow of the documents corresponds to a line pattern, the exchange of information between the database at the management center and the individual users corresponds to a conventional star pattern and provides an efficient tool for keeping track of each document that is being circulated. At the same time, the database can provide statistical information that will be useful for judging the extent to which the members of the institution make use of the available information resources and for deciding, for example, whether the supply of copies of documents of a specific type should be extended or rather be curbed.

The invention is not limited to the case that only a single copy of a document is circulated, but works equally well when multiple copies are circulated simultaneously. In this case, it may be left to the discretion of the users which copy will be forwarded to which recipient.

The invention relates also to a system and a computer program product configured to implement the method that has been described above.

More specific optional features of the invention are indicated in the dependent claims.

In order to adapt the circulation system even better to the needs of individual users, different levels of priority may be assigned to the individual users, and the allocation of priorities may differ from document to document. The list of active recipients will then include only those users who have the highest level of priority among the users who have not yet read the document. Only when the last of these users has received the document, the list of active recipients will show the users with the next lower level of priority. The priorities may be assigned by an administrator.

Where the documents to be circulated are regularly appearing publications such as magazines or newspapers, a preferred embodiment of the invention gives each user the opportunity to claim priority for a certain number of magazines, e.g. for two magazines, so that a kind of self-organization will assure that the sequence in which the users are served with the various documents matches as well as possible with the individual needs and preferences of the users.

Moreover, in a preferred embodiment, the users have the option to "subscribe" to available magazines and to cancel subscriptions by their own initiative, with the result that new users are added to the "static" list of potential recipients or are removed from that list. Then, the workload on behalf of the management center is reduced to receiving new issues of the magazines and to start the circulation thereof and, if necessary, to enforce the time limits that are granted to each user for reading the documents.

As an additional service, the management center may provide descriptions, summaries and the like of the available magazines and or their individual issues, e.g., when a new issue is received, the cover page and the table of contents may be scanned-in and may be made available online to all users or at least to the users who have subscribed to this magazine.

In addition, it is preferred that users who have subscribed to a certain magazine have the option to suspend their subscription for a specific issue of the magazine or for a certain period of time.

For these purposes, the database run by the management center may keep a personal record of each user, identifying the documents to which this user has subscribed, the documents for which subscription has been suspended, the priorities assigned to this user, and the like.

Preferred embodiments of the invention will now be described in conjunction with the drawings, wherein:
- Fig. 1: is a diagram illustrating a document and information flow in an embodiment of a method according to the invention;
- Fig. 2: is a diagram of a system that is used for carrying out the invention;
- Fig. 3: shows a main page that is presented to a user when he connects to a management center;
- Fig. 4: shows a sub-page providing circulation information for a specific issue of a document;
- Fig. 5: shows a sub-page indicating a personal profile of a user;
- Fig. 6: shows a sub-page giving an overview over publications that are available at the management center;
- Fig. 7: shows a sub-page providing details of a specific issue of a magazine;
- Fig. 8: shows a main page for an administrator of the management center;
- Fig. 9: shows an example of a static list of potential users; and
- Figs. 10 - 12: are flow diagrams of software routines that are run in the management center.

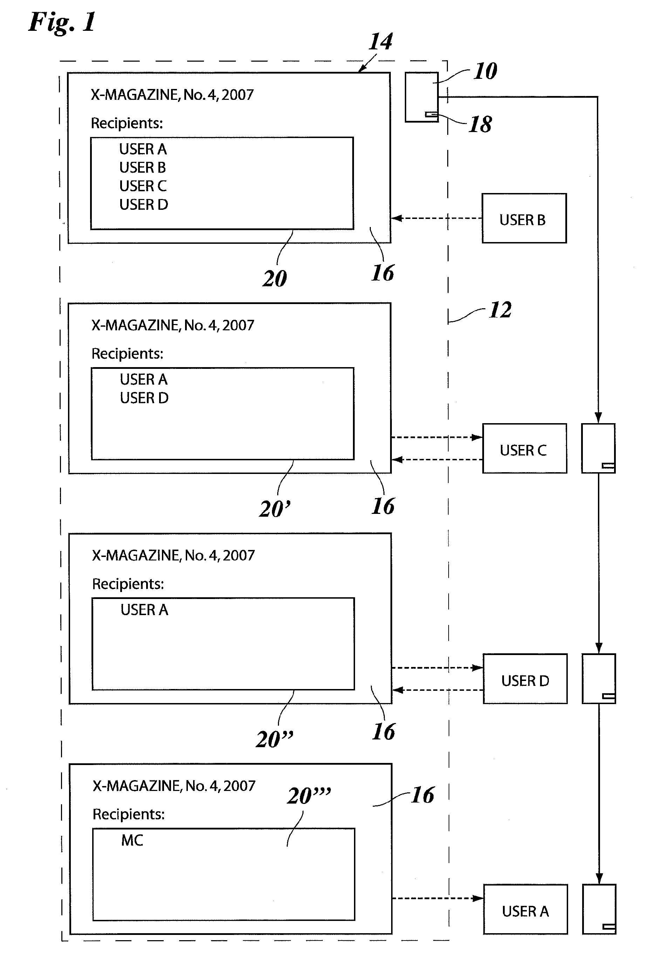

As has been symbolically shown in Fig. 1, a hard-copy of a document 10, e.g. a scientific magazine, has been received at a management center 12 and is considered as an object to be circulated among a plurality of users A, B, C and D under the control of the management center 12. To that end, the management center 12 includes a database 14 storing a record 16 for each document 10 that is being circulated.

In the example shown, the document 10 is provided with a machine-readable identification token 18, e.g. a bar code, an RFID chip or the like, that permits to automatically identify the document 10, e.g. by its title ("X-MAGAZINE") and its issue number ("No. 4, 2007"). If the copy of the document 10 is not delivered by the publishing company with the token on it already, the token may be applied in the management center 12 in the course of indexing the document and entering the same into the database 14. If the token 18 has been applied already on behalf of the publisher, of course, the process of indexing or cataloging the document, including creation of the record 16, can largely be automated.

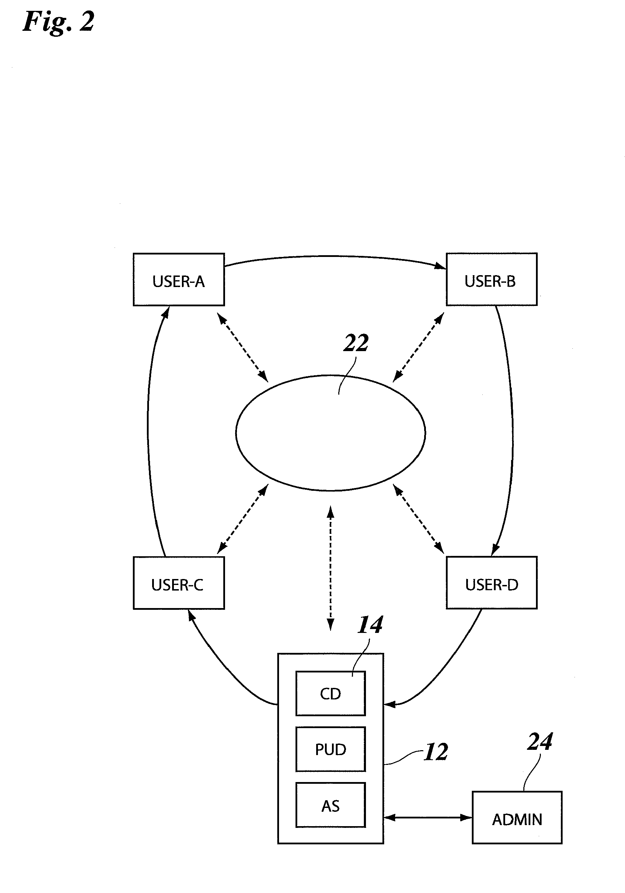

The management center 12 further includes a personal user database PUD (Fig. 2) that keeps a personal record for each of the users A - D. The user database PUD and the circulation database (CD) 14 are managed by an application software AS (Fig. 2) that also drives the reader for the tokens 18 and manages network communication with the users A - D. When the document 10 is indexed in the database 14, the application software refers to the user database PUD to identify those users who have subscribed to that magazine, as identified by its title ("X-MAGAZINE"). The list of users that is established in this way will be termed "static list of potential recipients", although it is of course possible that the entries in this list change along with changes in the PUD. Further, the application software copies this list into the record 16 for the pertinent magazine as a dynamic list 20 of "active" recipients. Thus, in the example shown, the list 20 initially includes the users A - D as active recipients.

When an administrator of the management center 12 wants to start the circulation of the document 10, he selects one user from the list 20 of active recipients, the user C in the example shown, and sends the physical copy of the document 10 to that user C, as has been indicated by a solid arrow in Fig. 1.

The selection of the first recipient may be made at random and may be automated by means of a random pattern generator included in the application software. In the latter situation, the operator only needs to confirm that he has sent the document to the selected first recipient. The user C, i.e. the first recipient, will then automatically be deleted from the list 20.

In the example shown, it is assumed that another user B connects to the database 14 (symbolized by an arrow in dashed lines) and indicates that, for the time being, he is not interested in receiving that particular issue (No. 4, 2007) of the title "X-MAGAZINE". This causes the application software to delete also the user B from the list 20 (but not from the static list), so that the list 20 changes to the status shown at 20' in Fig. 1. Thus, in this simplified example, there remain only two active recipients, A and D, to which the document 10 has to be sent.

When the user C has finished reading the document 10, he connects to the database 14 in order to see to whom he may now send the document. At that instant, the user C learns from the list in the status 20' that he should send the document either to user A or to user D. It is left up to him, which of these two users he chooses. Conveniently, he will select the user who is located next to him or who happens to pass by or whom he wanted to visit, anyway. This freedom of choice assures that the physical route along which the document 10 is sent is optimized as far as possible. In this context, it should be noted that "sending" means any type of physical transport of the hard-copy of the document 10, e.g. carrying and handing-out the same to the next user, sending it by (internal) mail, by pneumatic delivery or the like.

In the example shown in Fig. 1, where the physical transport of the document 10 is always indicated by arrows in continuous lines and communication between the users and the database 14 is indicated by arrows in dashed lines, the user C chooses to forward the document to user D, and he indicates this to the database 14. Consequently, the list 20 in the record 16 changes to the status 20" where only user A is left as recipient.

When user D has finished reading the document, he consults the database and learns that he has to forward the document to user A. When he confirms that he has forwarded the document, the last user A will also be removed from the list of active recipients, and the list changes to the status 20'" in which it contains only the entry "MC" which means that the document has to be returned to the management center 12.

Thus, when the user A has read the document and consults the database 14, he will return the document to the management center, and this terminates the circulation of the document.

In a specific embodiment of the invention, the list 20 may first be formed by a subset of the set of all potential recipients only. Then, when the list 20 has become empty, a second list of active recipients may be defined by selecting a second subset, whereupon the circulation starts anew with the second list.

Of course, the list of active recipients initially appearing in the record 16 may be significantly larger than in the simple example that has been given here. If a very large number of users is interested in that particular magazine, it is also possible that two or more copies of that magazine are ordered, so that two or more copies circulate in parallel. The second or any further copy of the document may be started to circulate in the same way as has been described for the document 10 and in any status of the list 20. The list will automatically assure that the second copy of the document is not sent to any user who has received already the first copy thereof. Likewise, each user who receives the second copy will be deleted from the list 20, so that he will not be served with the first copy of the same document. When no users are left in the list 20, this list will only show "MC", causing the last readers of all circulated copies to return their copy to the management center.

It will accordingly be understood that the term "object", as used in the claims, does in this case not refer to an individual hard-copy of a magazine, but rather to the entirety of all copies of the same magazine issue or, more generally to a class of identical physical items.

The method that has been described above implies that the users A - D and the management center 12 are interconnected by a network 22, preferably an electronic telecommunications network, as has been shown in Fig. 2. The network 22 may for example be the Internet or an Intranet to which the users A - D get access via their workstations or PCs. The circulation database 14 and the user database PUD may be installed on a server that is connected to the network 22 and also runs the application software AS and is operated by an operator or administrator 24. Conveniently, the server or the management center 12 may be installed in a library where the documents are received and where they are open to inspection before the circulation begins and after it has ended. Of course, the server may also be installed at a remote location and may be accessed by the administrator 24 via the network 22.

In Fig. 2, arrows in continuous lines (physical transport of the documents) and in dashed lines (communication), respectively, are illustrative of the line configuration of the physical transport of the documents and the star configuration of the information flow.

The method according to the invention will now be illustrated further by reference to a number of Internet pages that may appear in a browser window on a computer screen of one of the users in conjunction with the circulation process.

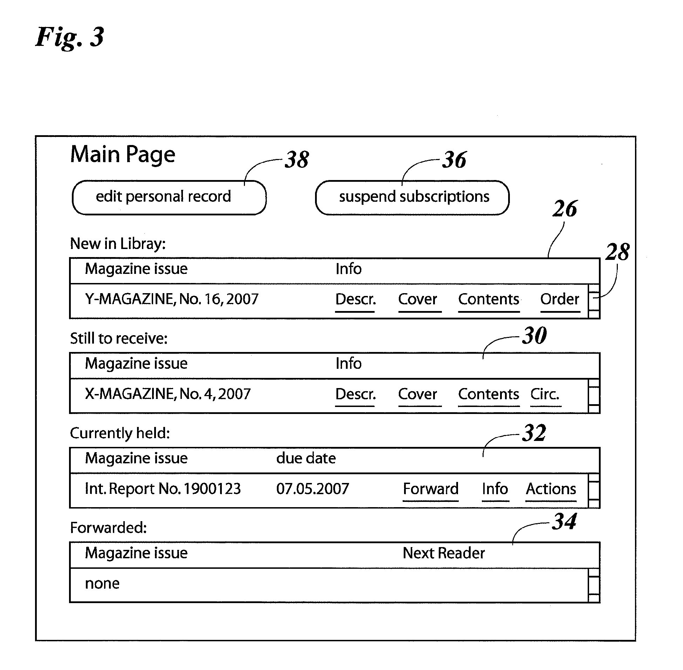

Fig. 3 shows a main page that a user will see when he connects to the management center 12.

A first table 26 alerts the user of magazines or magazine issues that have recently become available in the library (where the management center 12 is located). The left column in table 26 identifies the pertinent issue of the magazine, e.g. its title and its issue number, and the entries in the four right columns of table 26 are links (underlined text) to additional information or actions.

A link "Descr." permits to call-up a brief description of the magazine issue or, alternatively, of the magazine in general. Links "Cover" and "Contents" permit to call-up a picture of the cover page and of the table of contents of the magazine issue, respectively. These pictures have been scanned-in when the document was indexed in the database 14 and may for example be included in the pertinent record 16. By means of these links, the user may get an impression of what he will find in that document, so that he may decide whether it will be worth while to subscribe for that document.

A last link "Order" in table 26 permits the user to ask for a sample copy of that particular issue of the magazine. Upon that request, the user will be entered into the list 20 of active recipients for that document when it is circulated, but only for that individual issue, and when the next issue of the same magazine appears, he will not automatically be in the static list of potential recipients.

While only one line of the table 26 has been shown in Fig. 3, this table will normally include a larger number of lines and may be scrolled-through by means of a scroll bar 28. This will also be true for other tables that will be described below.

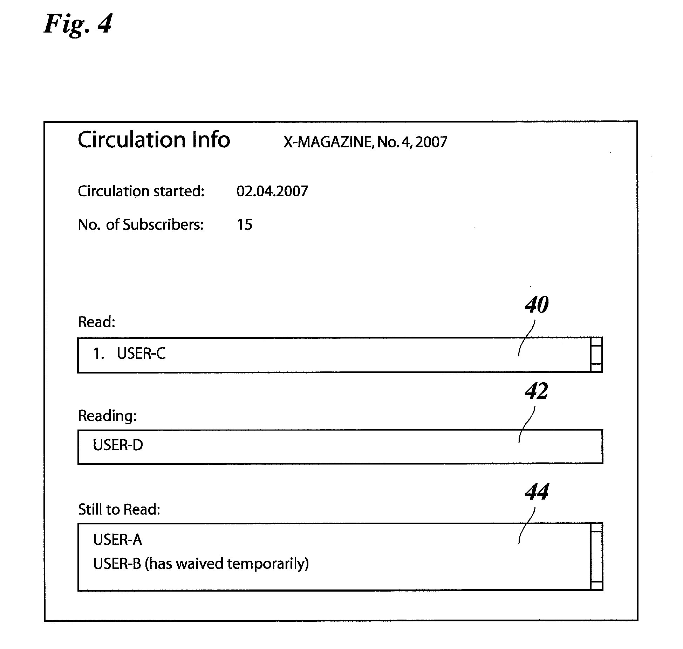

The next table 30 gives an overview over all the documents that the user has subscribed to and are circulated already. The links "Descr.", "Cover" and "Contents" have the same meaning as above. Another link "Circ." switches to a sub-page that will be discussed in conjunction with Fig. 4 and gives more detailed information on the circulation process.

The next table 32 is a list of all the documents that are currently in possession of that particular user. The due dates, when these documents have to be forwarded to the next recipient or returned to the management center are indicated in a column "due date".

It will be understood that each user is allowed to keep a document for a certain time, e.g. two working days, in order to be able to read the document, and will then have to forward the document to the next user. In order to calculate the due dates in table 32, the application software manages a list of public holidays, company holidays or other days that are non-working days for the pertinent company or institution, so that the due date may be calculated by counting in working days from the date on which the pertinent copy was forwarded or delivered to the user.

A link "Forward" will open the list 20 of active recipients (Fig. 1) for that particular document, so that the user may select the next recipient, i.e. by selecting a corresponding name in the list and then clicking onto a "confirm" button (not shown) in order to confirm that he forwards the document to that recipient.

Thus, when a user has read his copy and wants to pass it on to the next user, he may simply connect to the management center 12, so that he will be shown the main page as in Fig. 3 and can immediately select the document to be forwarded from table 32 and click the "Forward" link.

In a modified embodiment, the hardware equipment of the user may include a bar code reader or RFID reader with which he can read-in the identification token 18 on the copy of the document 10. In conjunction with suitable driver software on his computer, this will automatically cause the browser to connect to the management center 12 and to open the list 20 of active recipients for the document that has been identified by the token 18.

The link "Info" in the table 32 brings the user to the links "Descr.", "Cover" and "Contents" as in table 26 or 30, and a link "Actions" may be provided for more specific actions that are available to the user in conjunction with the pertinent document.

The last table 34 in Fig. 3 lists the documents that are still circulating but have already been read and forwarded by the present user. If there are any documents in this list, a column "Next Reader" will identify the user to which the document has been forwarded.

In a modified embodiment, when the user wants to forward the document to the next recipient, he may be given an option to forward the document "with reservation", which means that he wants to be served with the same document once again later in the circulation process. This option will be useful, for example, when the user receives the copy from his predecessor and then realizes that he will not have the time to read the document within the next two days, so that it will be preferable to let one or more other recipients pass-by.

As another option, the user may be allowed to apply for a single extension of term by another two days.

The main page in Fig. 3 further includes a button 36 "suspend subscriptions" which will have the effect that it is indicated to the management center 12 that, for the time being, the user is not interested in receiving any documents (e.g. because he will be out for vacations). Consequently, this user will be removed from the list of active recipients for all documents to which he has subscribed. Once the button 36 has been clicked, the function and title of this button will change to "activate subscriptions" i.e. the reverse operation which has the effect that this user is re-entered into the lists of active recipients.

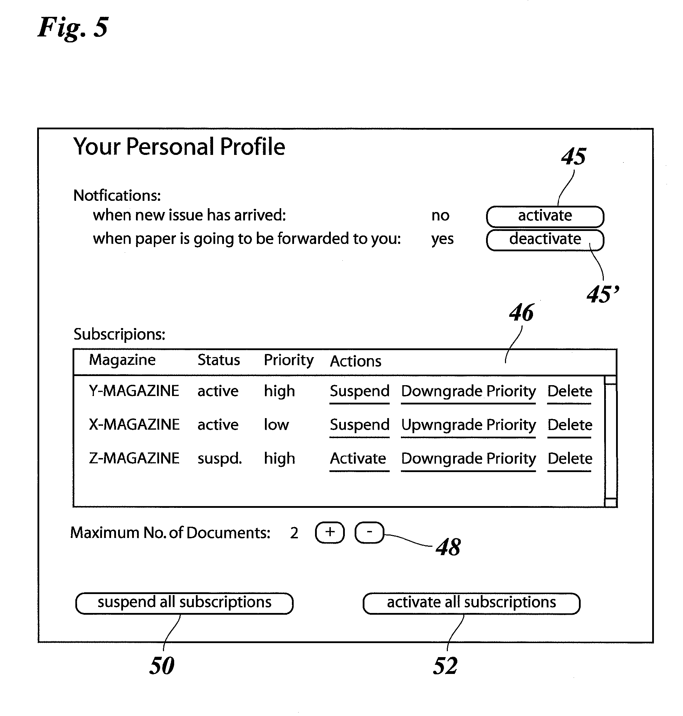

Another button 38 in Fig. 3 permits the user to edit his personal record in the database PUD, as will be described later in conjunction with Fig. 5.

When, in Fig. 3, the user clicks on the link "Circ." for one of the documents listed in table 30, he will be presented with the sub-page "Circulation Info" that has been shown in Fig. 4. This page gives more detailed information on the progress of circulation of the pertinent document.

The first line on the page indicates the date on which the circulation of this document has started. The next line indicates the number of users that have subscribed to this document.

Then, a table 40 lists the users, who have already read (and forwarded) the document, in the order in which they have read it.

A window 42 indicates the user who is currently in possession of the document.

Finally, a table 44 lists (e.g. in alphabetical order) the users who are still to read the document, i.e. the users appearing in the list of active recipients, and also the users that have temporarily suspended the subscription. These latter users are identified by a corresponding remark in the table 44.

Thus, when a user is urgently waiting for a specific document that has been put on circulation already (i.e. appears in table 30 in Fig. 3), he may open the page "circulation info" and may locate the document by reference to the window 42. Then, he may call the user (D) indicated in that window and ask him to forward the document to him.

Fig. 5 shows a page that displays the personal profile of the user and is reached via the button 38 in Fig. 3.

The first three lines on this page permit the user to specify whether or not he wants to receive certain event-triggered notifications. The application software AP in the management center 12 is capable of sending such notifications, e.g. in the form of automatically generated e-mails. For example, the user may specify (by clicking a button 45 "activate") that a notification be sent to him whenever a new issue of a magazine to which he has subscribed is received in the library.

In the example shown, the user has activated a function providing him with an automatic notification when a document is going to be forwarded to him, i.e. when his predecessor has indicated in the database 14 that he is forwarding the document to him. This option, which may be deactivated by clicking on a "deactivate" button 45', is particularly useful when the users are working at locations that are separated by relatively large distances, so that a kind of mail delivery system must be utilized for transmitting the document. Then, when a user receives the automatically generated notification but does not actually receive the announced document, he will be aware that the document has either got lost in the mail service or his predecessor has simply forgotten to dispatch it, and he may take appropriate measures. It will be in the interest of the user to assure that he actually receives a document once it has been announced, because the time he is allowed for keeping the document will normally be calculated on the basis of the time when the predecessor notifies that he has forwarded the document.

In a modified embodiment, a user who has received a circulated document may be required to send a receipt acknowledgement to the management center within a certain period of time after the predecessor has notified that he has forwarded the document.

The personal profile page further includes a table 46 that synoptically lists all the magazines (or other publication series) to which the user has subscribed. For each of these magazines, the second column in table 46 indicates the status, active or suspended. Here "active" means that the user is to be included in the list of active recipients, and "suspended" means that he has temporarily been removed from that list, e.g. because the user has pressed the button 36 in Fig. 3.

Links "suspend" and "activate" in the fourth column in the table 46 permit to change the active or suspended status of each individual magazine.

A link "delete" in the rightmost column in the table 46 has the effect that the subscription to a specific document is cancelled permanently, so that this document will disappear from the table 46 and from the static list of potential recipients.

In the shown embodiment, the user may choose between different levels of priority for each individual magazine to which he has subscribed. In the example shown, only two levels of priority, either "high" or "low", are available, and these priorities are indicated in the third column in the table 46. The user is free to change the priority level of each document by means of the links "Downgrade Priority" and "Upgrade Priority" in the fourth column in table 46. However, the user has to respect the limitation that not more than two of the magazines he has subscribed to can have a high priority. (In other embodiments, the limit may be 1, 3 or more). The number may be user-specific.

The designation of different priorities has the following effect. When a document is launched for circulation (as in the first step in Fig. 1), the list of active recipients will show only those subscribers who have assigned a "high" priority to this document. Other users, who have assigned a low priority, will not appear in the list, so that it is assured that the document will at first be delivered to those users with high priority. Only when the document has reached the last of these users, the list 20 will switch to show the users who were assigned a low priority, and the circulation is terminated when last low priority user has been removed from the list.

Since the management center 12 can keep track of all the documents that are in circulation, it is also possible to make the priority level dependent on the number of documents that a user has currently in his possession. The idea behind it is that a user who keeps already a large number of documents will not have the time to read another document, anyway. Thus, for example, the priority level (high) may become effective only when the user keeps no other document or not more than a certain number of documents. Thus, the user can make his high priority level become effective by quickly forwarding the document or documents that is (are) currently in his position. Likewise, low-priority users may be divided into those who are currently not in possession of any documents and those who keep already one or more documents, and the latter will receive an even lower priority.

Similarly, the user may himself specify a certain maximum number of documents that he wants to keep simultaneously. In the given example, this maximum has been set to "2". Buttons 48 are provided for increasing ("+") or decreasing ("-") that number. Thus, when the management center finds that the maximum number of documents has been reached, the user will be removed from the lists of active recipients for all documents, until at least one of his documents is passed-on to the next user.

Finally, buttons 50 and 52 in Fig. 5 have the function to suspend and re-activate, respectively, all subscriptions, similarly as the button 36 in Fig. 3.

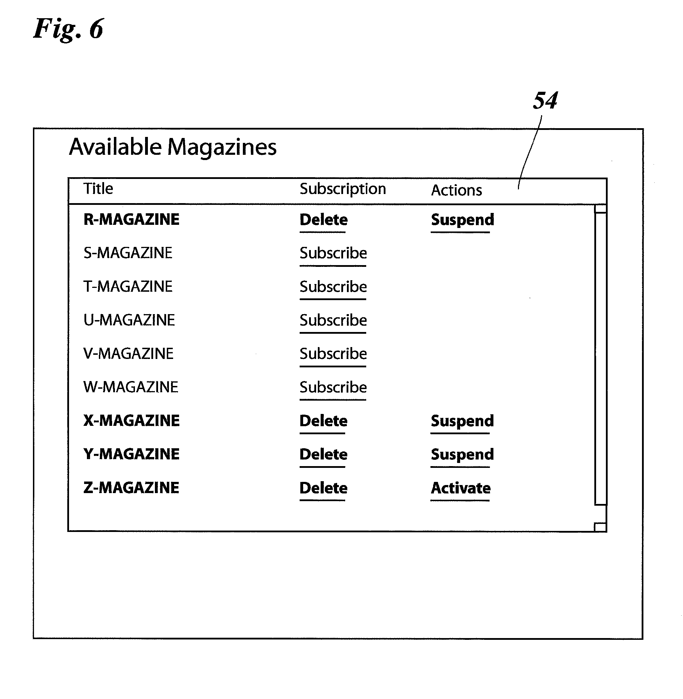

When a user wants to add new magazines to his profile, he may switch to a page "Available Magazines" that is shown in Fig. 6 and includes a table 54 listing the titles of all magazines (or other periodical publications) that participate in the circulation system, whether the user has subscribed to them or not. The magazines to which the user has subscribed are highlighted in the table 54. For these magazines, the user has the options "delete" for cancelling the subscription completely, and "suspend" for temporarily deactivating the subscription. If a subscription has been deactivated (but not deleted), the option "suspend" is replaced by the option "activate".

For the magazines to which the user has not yet subscribed, there exists only the option "subscribe", which has the effect that the user will be listed as a subscriber.

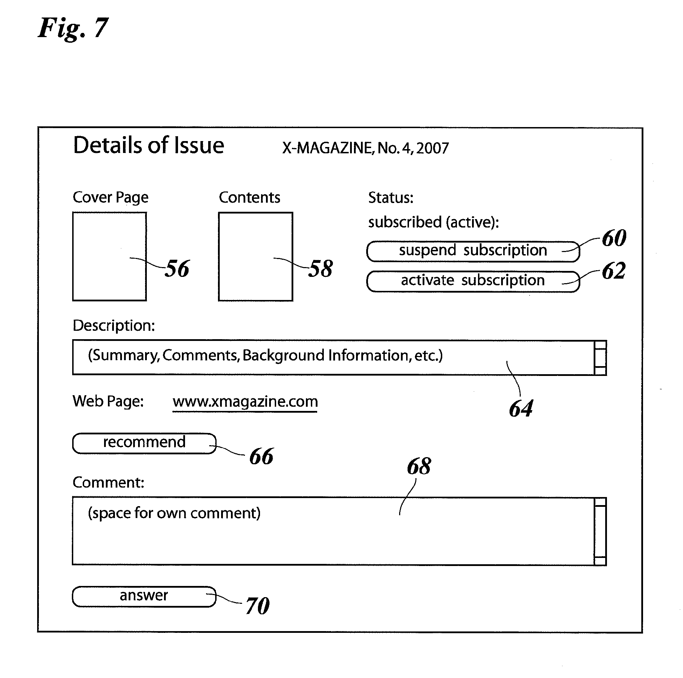

While the table 54 in Fig. 6 relates only to magazines in general, as distinguished by their title, and not to individual issues, Fig. 7 shows a page that can be called-up in order to view details of a specific issue and/or to perform specific actions relating to that issue.

In the first line of that page, thumb nails 56 and 58 permit to call-up the scanned-in cover page and table of contents, respectively. Further, the status of the magazine (subscribed or not, active or suspended) is indicated here, and buttons 60, 62 are provided for suspending and re-activating the subscription, if the status is "subscribed", or for subscribing, if the status is "not subscribed".

A (scrollable) text window 64 may include a description of the document. Additionally, a link to an Internet page of the editor of the magazine may be provided.

A button 66 opens a specific function for recommending the document to another user. When this button is pressed, the user who wants to recommend the document is prompted to indicate the identity of the user to whom he wants to recommend the document. This will have the effect that the latter user is included in the list of active recipients for this specific issue of the magazine, so that he will get the opportunity to review this document as a sample copy. Preferably, the recommendation is accompanied by an automatically generated e-mail notifying to the user which document has been recommended to him and who has recommended it.

A text window 68 is provided for personal comments of the user or users who open this page. Preferably, when the document is recommended to someone else, this comment will also be included in the e-mail message.
Another button 70 gives the user, to whom the document has been recommended, the option to answer to the recommendation and to make his own comments.

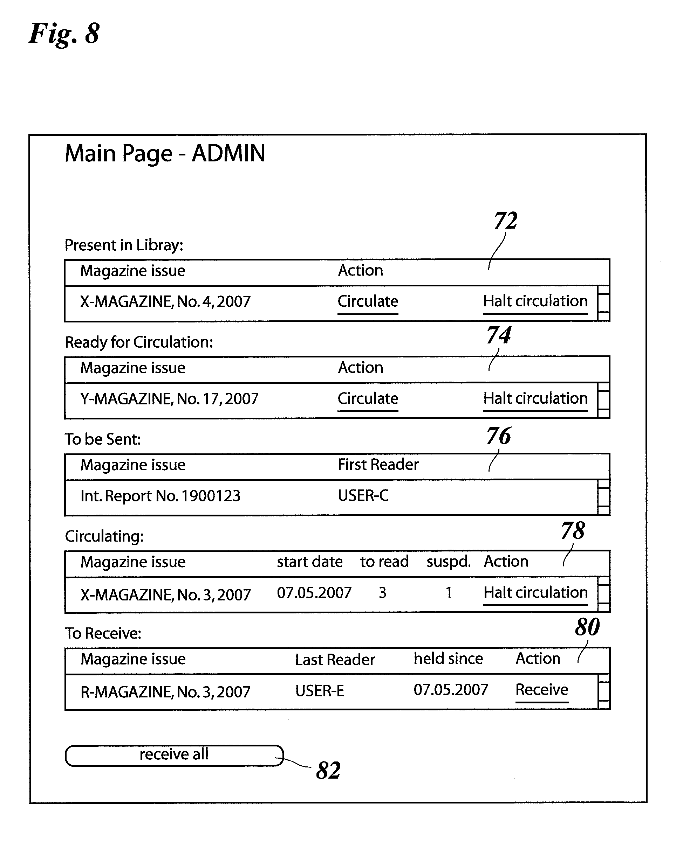

Fig. 8 shows a possible configuration of a main page that will not be presented to the user but to the administrator 24 (Fig. 2).

A first table 72 on that page lists all the magazine issues that are present in the library but of which no copies are circulated as yet. It is assumed here that, when one or more copies of a new issue of a magazine arrive in the library, they are indexed in the database 14, so that they may be seen in the table 26 of the user main page (Fig. 3), but are still kept in the library. For example, when a magazine appears monthly, each issue will be kept in the library until the issue for the next month is received, so that the most actual issue will always be available in the library whereas the earlier issues are circulated among the subscribers. A link "Circulate" in table 72 will start the circulation process as has been described in conjunction with Fig. 1. Of course, the administrator will have to assure that the copy of the document is physically sent to the first recipient.

Conversely, an option "Halt circulation" will break off the circulation process irrespective of its current status. Thus, this option will have the effect that the dynamic list of active recipients is cleared and brought to the status 22"' in Fig. 1 where the entry "MC" shows that the document (all copies thereof) have to be returned to the management center rather than to be forwarded to another user.

A table 74 in Fig. 8 lists the magazine issues that are ready for circulation, i.e. issues of the magazines for which a new issue has been received already. Here, the same options "Circulate" and "Halt Circulation" are available.

When the option "Circulate" is applied in table 72 or 74, the pertinent magazine issue is shifted to a table 76 which lists the documents for which the circulation is to start, i.e. which are to be sent to the first reader. The first recipient (e.g. randomly selected) is also indicated in that list.

When the administrator confirms that the document has been transferred to the first recipient, this document is shifted from the table 76 to a table 78 including the magazines that are currently on circulation. This table indicates, in the second column, the date at which the circulation has started. The third column "to read" indicates the number of users who have subscribed to this document but have not yet received and read the present issue. Of course, this number will gradually decrease to zero in the course of the circulation.

The next column "suspd." indicates the number of subscribers who have preliminarily suspended the subscription.

The option "Halt circulation" is available here as well.

Finally, a table 80 in Fig. 8 shows the documents for which the circulation cycle has been completed and which, consequently, are to be returned to the management center. For each of these documents, the table 80 indicates the last reader, i.e. the user who is to return the document, and the date when the last reader has received the document (or alternatively the date when he has to return the document).

When the last reader has physically returned the document, the administrator will click on the option "Receive" in the last column of the table 80 in order to acknowledge receipt of the document, with the result that the document will be removed from the table 80. This document may then appear again in the table 72, if it is kept in the library.

A button 82 provides a shortcut for acknowledging the receipt of all documents that are listed in table 80 with one click. This will be useful if all the documents that are due to be returned on a given day have been returned until the end of the day, and the administrator then updates the table 80.

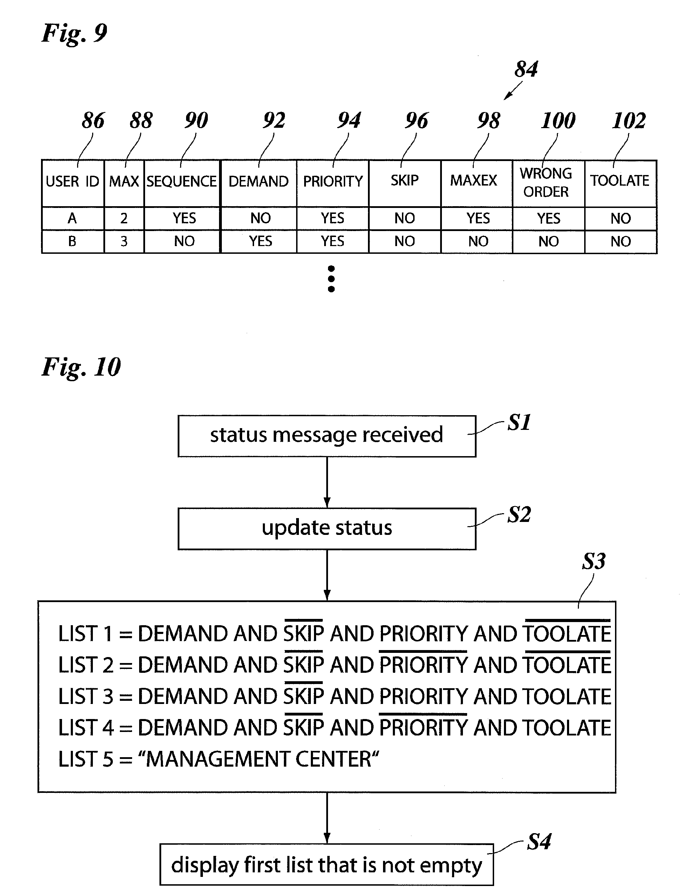

A possible implementation of the application software AS will now be described in conjunction with Figs. 9 - 12.

Fig. 9 shows an example of a static list 84 of potential users for a specific document. This list is "static" in the sense that the users it contains do not depend upon the progress of the circulation, in contrast to the dynamic list 20 which changes in the course of a circulation process.

A first column 86 of the list in Fig. 9 indicates the user IDs of all the potential recipients. The other columns specify a number of attributes and logic variables for each of these users.

A column 88 "MAX" specifies the maximum number of documents that the user wants to hold or is allowed to hold at a time, as may be specified by the user with the buttons 48 in Fig. 5.

The next column 90 "SEQUENCE" in Fig. 9 indicates the status of an option that is available for periodically appearing magazines. When the user has selected this option ("YES") he will receive the numbered issues of the magazine strictly in the order in which they appear.

The other columns 92 - 102 in Fig. 9 include logical variables that change in accordance with status information provided by the users and/or the application software itself and serve as criteria for selecting, from the static list 84, the users that are to be included in the dynamic list 20 of active users.

The variable "DEMAND" in column 92 is set to "YES" for all users when the circulation starts, and is turned to "NO" for each user who has been indicated as "next user" in a forward message in the cause of the circulation process. Thus, this criterion assures that each user will receive the document only once.

The variable "PRIORITY" in column 94 specifies whether the user has a high priority ("YES") or a low priority ("NO") as was discussed in conjunction with Fig. 5.
In another embodiment, "PRIORITY" may be implemented as a multivalued variable, to specify plural priority levels.

The variable "SKIP" in column 96 specifies whether or not the user has indicated that he is not in interested in receiving the document for the time being.

A variable "MAXEX" in column 98 assures that the user will not receive more copies at a time than was specified in column 88 ("MAX"). The application software keeps track of the circulation of all the documents in the data base and counts, for each user, the number of documents that are currently held by the user. When this number reaches the maximum numbers specified in column 88, the variable "MAXEX" is a set to "YES", with the effect that this user will be removed from the dynamic list 20 until "MAXEX" is reset to "NO" again.

An variable "WRONG ORDER" in column 100 is related to the option "SEQUENCE" in column 90. For example, when the user has selected this option ("YES") and the list 84 shown in Fig. 9 relates to an issue No. 4 of a magazine, but the issue No. 3 of the same magazine has not yet been delivered to the user in question, then the variable "WRONG ORDER" for this user will be set to "YES", with the result, that this user will be removed from the dynamic list 20 until the issue No. 3 has been delivered to him.

The variable "TOOLATE" in column 102 checks whether the user has exceeded the allowed reading time for any other document (i. e. any document except the one to which the list 84 pertains). In this case, the variable "TOOLATE" in the list 84 is set to "YES" for that user, with the result that this user will be removed from the list 20 of active recipients until he has returned or forwarded all overdue documents. It will be understood that the user cannot change the variable "TOOLATE" on his own initiative, except by returning or forwarding his documents in time.

The entries in columns 98 and 100 are determined by the application software, but depend on the settings that have been made the user in columns 88 and 90, respectively.

The entries in columns 94 and 96 can be changed by the user at his own discretion (as long as he respects the limits regarding the number of priority documents).

The variable "DEMAND" is normally changed by the application software in accordance with the forward messages received from the users, but may also be changed by a user. For example, a user may turn the variable "DEMAND" to "YES" when he wants to receive a sample copy of the document (link "Order" in Fig. 3). Conversely, if the user does not just want to skip the document for a certain time (column 96) but wants to permanently waive the present issue of the document, he can do this by changing the variable "DEMAND" to "NO".

Fig. 10 is a flow diagram of a routine that is performed by the application software AS when a status message is received from any of the users or is generated by the application software itself. Such a status message may for example be a forward message from a user, indicating that he has forwarded the document to the next user, or any other message or event that may lead to a change in an entry in any of the columns 88 - 102 in Fig. 8. When such a status message is received in step S1, the application software updates, in step S2, the entries in columns 88 - 102 of Fig. 9 in accordance with the received message.

Then, the dynamic list 20 of active users is updated in steps S3 and S4. For simplicity, this process will be described in consideration of only four criteria concerning the four variables "DEMAND", "SKIP", "PRIORITY" and "TOOLATE". The extension to other criteria indicated in Fig. 9 will be straightforward.

In step S3, five lists "LIST 1" - "LIST 5" are created. For LISTS 1 - 4, this is done by selecting from the static list 84 only those users for which a specific Boolean function of the logic variables or criteria is fulfilled. Each of the LISTS 1 - 4 will include only those users for whom the variable "DEMAND" is "YES" and the variable "SKIP" is "NO" (a bar above the name of the variable in Fig. 10 means the negation of the logic variable). The LIST 1 is further limited to users for whom the variable "PRIORITY" is "YES" and the variable "TOOLATE" is "NO". LIST 2 is limited to the users for whom the variable PRIORITY is "NO" and the variable TOOLATE is also "NO". Similarly, LIST 3 is limited to users for whom PRIORITY is "YES" and TOOLATE is also "YES", and LIST 4 is limited to users for whom "PRIORITY" is "NO" and TOOLATE is "YES". LIST 5 consists only of the single entry "MANAGEMENT CENTER".

In step S4, the LISTS 1 - 5 are gone through, and the first among these LISTS that is not empty is displayed as the current status of the dynamic list 20. Consequently, as long as the dynamic list is identical with LIST 1, the document will only be forwarded to users who have claimed priority and are not late with returning other documents. When all these users have been served, the dynamic list changes to LIST 2, so that the document will then be forwarded to users without priority who are not late with returning other documents. When all these users have been served as well, the dynamic list changes to LIST 3 to serve the users who claim priority but still hold any other document that was not returned or forwarded in time. Finally, the users who have not claimed priority and have failed to return another document in time will be the last to receive the document. When the last one of these users has received the document and is consequently removed from the dynamic list (because DEMAND changes to "NO"), the status of the dynamic list changes to LIST 5, i. e. to the entry "MANAGEMENT CENTER", which means that the document has to be returned to the management center.

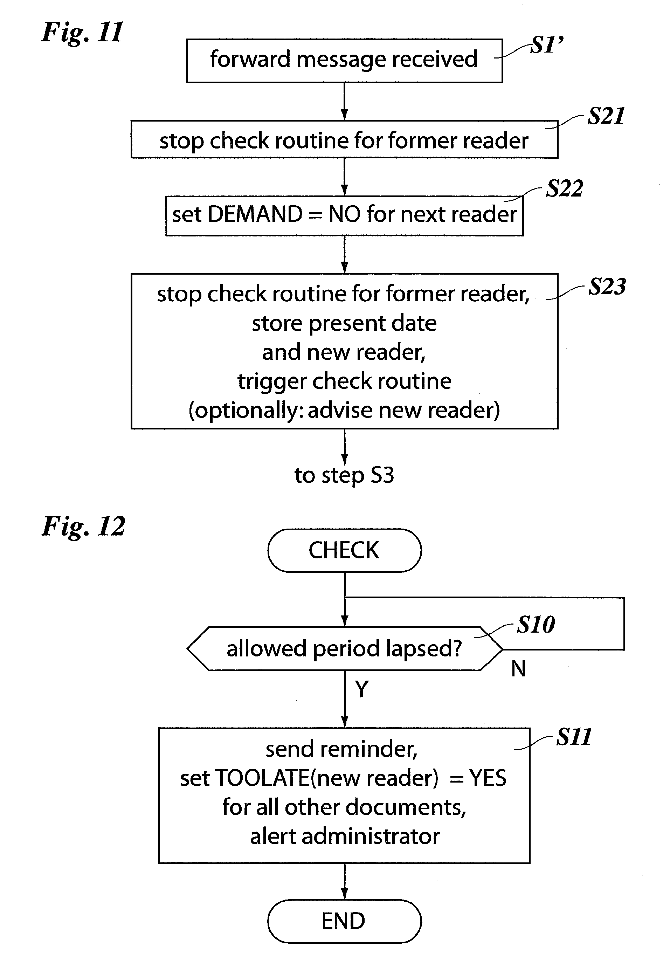

The application software AS includes also a mechanism for checking whether a user is late with returning or forwarding his copy. This mechanism will now be described with reference to Figs. 11 and 12.

Fig. 11 is a more detailed flow chart for the step S2 in Fig. 10 and for the special case that the received status message (step S1') is a forward message. Thus step S'1 in Fig. 11 indicates the event that a user notifies to the management center that he is forwarding a document to the next recipient, i.e., the user consults the database 14, selects a user from the list 20 of active recipients and confirms that he going to send the document to that recipient, further to be called "next reader".

Then, in a step S21, a check routine for the former reader, who has sent the forward message, is stopped. The check routine will be described below in conjunction with Fig. 12.

Then, in step S22, the variable DEMAND for the next reader, i.e. the one that has been indicated in the forward message, is set to "NO".

In the next step S23, the date of receipt of the forward message and the "next reader" indicated therein are stored, so that this information will be available, for example, in the field 42 of the circulation info page (Fig. 4) and in table 80 of the administrator main page (Fig. 8). The check routine is then started for the next reader. Optionally, the application software may automatically generate an e-mail message that is sent to the next reader to announce that the document is being forwarded to him. Subsequent to step S23, the routine proceeds with step S3 in Fig. 10.

The above-mentioned check routine is shown in Fig. 12. A step S10 checks whether the period (e.g., in working days) which the pertinent reader (stored in step S23) is allowed for reading the document has lapsed. As long as this is not the case, step S10 is repeated in a loop until the routine is stopped by step S21 or the period elapses and the loop is exited via step S11.

In step S11, the application software automatically sends an e-mail reminder to the user who is late with forwarding the document and sets to "YES" the variable TOOLATE for all other document circulations in which this user is involved. As a consequence, the user who is in delay will not be served with any documents until he has returned the overdue document.

In addition, step S11 may include an automatic alert message for the administrator. For example, the table 78 on the administrator main page (Fig. 8) may include a column that indicates for each document the current reader, and documents that become overdue may be highlighted in that list. Alternatively or in addition, at the end of the day, a list with details of all delays that have occurred that day may be sent to the administrator by e-mail (generated automatically).

It will be understood that a variety of useful additional pages may be added to the system that has been described above. For example, the administrator may have access to a statistics page showing the number of regular readers for each document, the average circulation time and the like. This may assist the administrator in decisions such as ordering extra copies of a frequently demanded magazine or cancelling a standing order for a magazine if it is hardly read at all.

Moreover, a statistics page may show how frequently the individual users get belated with returning or forwarding their copies, and defaulting users may be "punished" by downgrading their priority.

As another additional feature, the application software AS may also be configured to permit the users to circulate own documents on their own initiative. The user who wants his colleagues to read a specific one of his own documents will enter this document into the database 14, specify a (static) list of recipients and launch the circulation by selecting a first recipient. In this case, however, when the list of recipients becomes depleted, it will not show "MANAGEMENT CENTER" (as in Fig. 10), but instead it will show the name of the user who has started the circulation, so that the document will be returned to him.

Finally, it should be observed that the method according to the invention is applicable not only for circulating hard copy document objects, but may be equivalently applied in other cases where objects are shared among a plurality of users.

## Claims

1. Method for managing circulation of physical objects (10) among a plurality of users
(A D) who are connected to a management center (12) through a telecommunications network (22), **characterized by** comprising the steps of:
a) on behalf of the management center (12):
- maintaining in an electronic database (14), for each object to be circulated, a static list (84) of potential recipients,
- receiving and storing object-related status information from the recipients
- maintaining and updating, in the database (14), a dynamic list (20) of active recipients by selection from the static list (84) by means of fixed criteria and on the basis of the status information, and
- allowing users to access the dynamic list (20) of active recipients via the network (22),
b) on behalf of a user (A - D) wanting to forward an object (10) to another recipient:
- consulting the dynamic list (20) of active recipients for that object and selecting from that list another user (D) as next recipient,
- physically forwarding the object (10) to that recipient,
- and sending status information notifying the next recipient to the management center (12).

2. Method according to claim 1, wherein upon receipt of status information notifying a next recipient, this next recipient is removed from the dynamic list (20).

3. Method according to claim 2, wherein when the a current dynamic list (20) of active recipients for an object (10) has become depleted and there are still potential recipients in the static list (84) who have not received that object, a new dynamic list (20) is formed by selection from the latter.

4. Method according to claim 1, wherein said database (14) is updated with information on objects (10) that may be circulated or are being circulated already, and wherein the users are allowed to subscribe for any of these objects, with the result that the subscribing user will be put on the static list (84) of potential recipients for this object.

5. Method according to any of claims 1 to 4, wherein the objects (10) to be circulated are hard-copy documents.

6. Method according to any of claims 1 to 4, wherein the objects (10) are sequenced objects, such as issues of periodical publications, and users are allowed to subscribe to these publications, with the result that they are put on the static list (84) of potential recipients for every new issue of that publication.

7. Method according to claim 6, wherein, when an earlier and a later issue of a same publication circulate simultaneously, a user is removed from the dynamic list for the later issue until he has received the earlier issue.

8. Method according to any of the preceding claims, wherein the selection from the static list (84) for defining the dynamic list (20) is made on the basis of any of:
- a level of priority of each recipient or
- the number of objects that are currently held by each recipient, or
- any exceedings of a predefined allowed holding period by each recipient.

9. Method according to claim 8, wherein users are allowed to apply for a limited extension of their allowed period of time.

10. Method according to any of the preceding claims, comprising a step of allowing users to start circulation of an object on their own initiative.

11. Method according to any of the preceding claims, wherein users are allowed to enter comments on the objects (10) into the database (14) for presentation to other users.

12. Method according to any of the preceding claims, wherein users are allowed to put other users onto the dynamic list (20) of active recipients.

13. A system for managing circulation of physical objects (10) among a plurality of users
(A D), comprising a management center (12) with electronic data processing facilities, and a telecommunications network (22) connecting the management center (12) to the users, **characterized in that** the data processing facilities of the management center (12) are adapted to perform the steps of:
- maintaining an electronic database (14) that stores a static list (84) of potential recipients for each object (10) to be circulated,
- forming a dynamic list (20) of active recipients by selection from said static list (84),
- dynamically adding or removing users in the dynamic list (20) in accordance with status information sent from the users via the network,
- selecting or allowing selection of a first user (C), to whom an object (10) is to be sent, from the dynamic list (20),
- allowing users to access the database (14) via the network (22), for viewing the dynamic list (20) of active recipients, and
- when a user (C) indicates another user (D) as a next recipient of the object, storing the identity of that other user (D).

14. A computer program product comprising program code that, when run on a computer, causes the computer to perform the steps of:
- maintaining an electronic database (14) that stores a static list (84) of potential recipients for a physical object (10) to be circulated,
- forming a dynamic list (20) of active recipients by selection from said static list (84),
- dynamically adding or removing users in the dynamic list (20) in accordance with status information sent from the users via the network,
- selecting or allowing selection of a first user (C), to whom an object(10) is to be sent, from the dynamic list (20),
- allowing users to access the database (14) via a network (22), for viewing the dynamic list (20) of active recipients, and
- when a user (C) indicates another user (D) as a next recipient of the object, storing the identity of that other user (D).
